# EUROPEAN PATENT APPLICATION

(11) **EP 3 018 617 A1**
(43) Date of publication of application: **11.05.2016**
(21) Application number: 15192826.4
(22) Date of filing: 03.11.2015
(51) Int. Cl.: G06Q 10/08

(54) **COLOR BOM AUTHORING WITH COLOR BOM SOLVE**

(30) Priority: 07.11.2014 IN 1139KO2014; 20.03.2015 US 201514663594
(71) Applicant: Siemens Product Lifecycle Management Software Inc., Plano, TX 75024-6612 (US)
(72) Inventor: LATKAR, Mukul, 411038 Kothrud Pune (IN); JAIN, Anup, Troy, MI Michigan 48084 (US)
(74) Representative: Isarpatent

(57) **Abstract**

Methods for product data management and corresponding systems (100) and computer-readable mediums. A method includes receiving (520) an order (160) with an order condition (162). The method includes (525) a set of valid condition statements (152) from a bill-of-materials (BOM) (150). The method includes (540) color part usages (212, 222, 232) in the BOM (150) according to the valid condition statements (152) and a color condition statement (152). Each color part usage (212, 222, 232) corresponds to a less-finish part usage (202), and wherein each less-finish part usage (408) includes engineering conditions and the color part usages (424) do not include engineering conditions. The method includes returning (545) a result set according to the order condition, the result set including colored part usages (424).

## Description

### TECHNICAL FIELD

The present disclosure is directed, in general, to computer-aided design, visualization, and manufacturing systems, product lifecycle management ("PLM") systems, and similar systems, that manage data for products and other items (collectively, "Product Data Management" systems or PDM systems).

### BACKGROUND OF THE DISCLOSURE

PDM systems manage PLM and other data. Improved systems are desirable.

### SUMMARY OF THE DISCLOSURE

Various disclosed embodiments include methods for product data management and corresponding systems and computer-readable mediums. A method includes receiving an order with an order condition. The method includes identifying a set of valid condition statements from a bill-of-materials (BOM). The method includes finding color part usages in the BOM according to the valid condition statements and a color condition statement. Each color part usage corresponds to a less-finish part usage, and each less-finish part usage includes engineering conditions and the color part usages do not include engineering conditions. The method includes returning a result set according to the order condition, the result set including colored part usages.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 illustrates a block diagram of a data processing system in which an embodiment can be implemented;
Figure 2 illustrates a less-finish part and corresponding colored parts in accordance with disclosed embodiments;
Figure 3 illustrates an example of a color explosion rules matrix in accordance with disclosed embodiments;
Figures 4A-4D illustrate managing color and engineering conditions and a BOM solve for the color order in accordance with disclosed embodiments; and
Figure 5 illustrates a flowchart of a process in accordance with disclosed embodiments.

### DETAILED DESCRIPTION

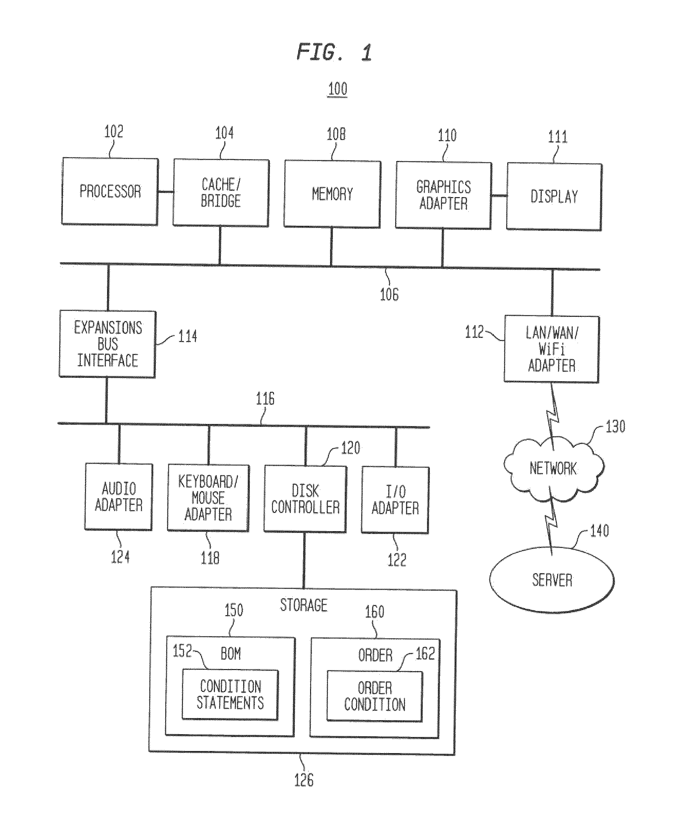

FIGURES 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

A "bill of materials" (BOM), as used herein, refers to a list of parts which make up a deliverable product. The BOM for a product can be documented by authoring part "usage" statements/objects. The conditions under which the part is to be used in a product, is expressed with a logical expression or condition statement associated with a "part usage" object. The part usage object also has additional information such as quantity and effectivity dates, to qualify the validity of the use of the part on a time scale, in one or more product variants. While this document uses the specific term "part usage object," those of skill in the art recognize that other terms can be used to describe equivalent objects.

Some software products, such as the Teamcenter software product of Siemens Product Lifecycle Management Software Inc. (Piano, Texas), support the ability to "query" or "solve" part usages for an input order expression/condition and retrieve the correct list of parts according to the part usage objects and based on these usage conditions. In short, "solve" will take an order expression as input and return the part usages that meet the order condition.

Certain products such as automobiles or household appliances have parts which are colored in appearance, typically by applying a paint or finish to the product before it is sold. Original equipment manufacturers (OEMs) of products like these offer products that a customer can choose or order in different color or appearance schemes. Each color scheme may come with a set of parts that may have different visual appearance in terms of a combination of color and material. Disclosed embodiments include a BOM that can be maintained and solved for appearance- or color-specific attributes of part objects. For example, for a product order for a specific color such as "red", a system as disclosed herein can return red-colored parts where ever appropriate, including the regular non-colored parts. An order may have input conditions for multiple color or appearance selections for different parts of the product; for example, a red body and a black bumper.

Figure 1 illustrates a block diagram of a data processing system in which an embodiment can be implemented, for example as a PDM system particularly configured by software or otherwise to perform the processes as described herein, and in particular as each one of a plurality of interconnected and communicating systems as described herein. The data processing system depicted includes a processor 102 connected to a level two cache/bridge 104, which is connected in turn to a local system bus 106. Local system bus 106 may be, for example, a peripheral component interconnect (PCI) architecture bus. Also connected to local system bus in the depicted example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices. Storage 126 can store a BOM 150 as described herein, which has an associated set of condition statements 152. Storage 126 can also store an order 160 with order condition 162. As described in more detail below, order 160 can be an order for a product, part, or assembly, and the order condition 162 can include a condition of uncolored, less-finish, or colored part usages. The order condition 162 can include effectivity date, engineering conditions, or revision configuration rules.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware depicted in Figure 1 may vary for particular implementations. For example, other peripheral devices, such as an optical disk drive and the like, also may be used in addition or in place of the hardware depicted. The depicted example is provided for the purpose of explanation only and is not meant to imply architectural limitations with respect to the present disclosure.

A data processing system in accordance with an embodiment of the present disclosure includes an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

During the product development phase, all engineering documentation (including design) is done using what is called as "in-white" part or "less-finish" part; that is, the part as represented without paint, finish, or other coloring applied, since appearance or colors of the product can be decided later in the product development phase. The engineering of the identified color parts can happen independently of the strategy for offering color variants of the product. The decision to offer a certain color may be governed by business reasons such as customer preference, market needs, contemporary /seasonal trends etc. The "less-finish" part serves as the engineering template for the colored parts that will eventually be used on the color product variant. A color part is a distinct object or a record in the BOM database that has its own set of properties (engineering as well as appearance related such as color, texture, gloss). A usage statement for such a color part will be referred to as a "colored part usage" herein.

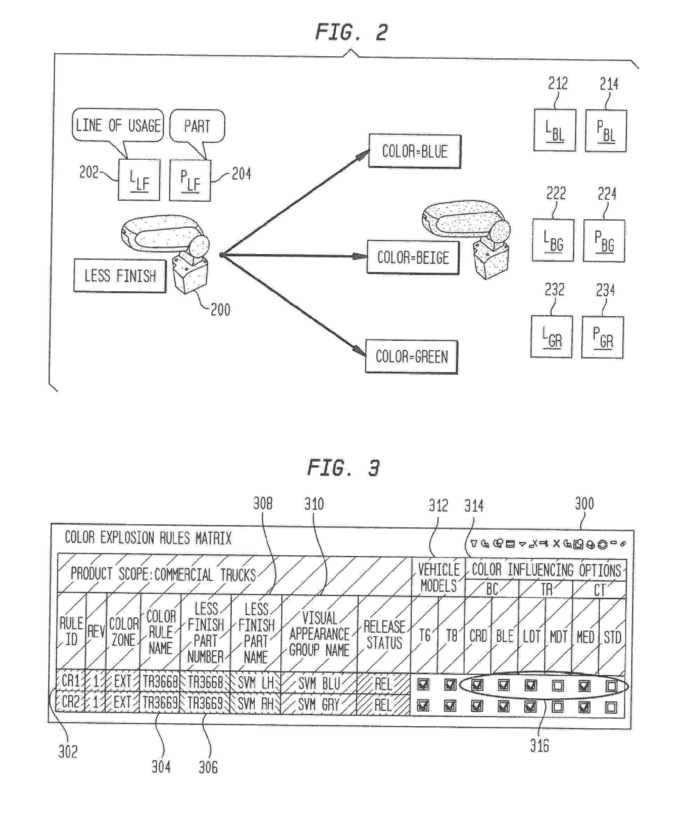

Figure 2 illustrates a less-finish part and corresponding colored parts in accordance with disclosed embodiments; in this figure, the terms "line of usage" and "part usage" are used interchangeably. In this figure, the less-finish part 200 is represented in the BOM 150 by the less-finish part 204 (P_{LF}) and less-finish part line of usage 202 (L_{LF}). One or more colored parts or color part usages can be derived from and correspond, in the BOM, to the less-finish part 204 and less-finish part line of usage 202, including, in this example, the blue colored part 214 (P_{BL}) and blue part line of usage 212 (L_{BL}), the beige colored part 224 (P_{BG}) and beige part line of usage 222 (L_{BG}), and the green colored part 234 (P_{GR}) and green part line of usage 232 (L_{GR}).

A BOM for a product as described herein can therefore have a several less-finish parts, part usages for these less-finish parts. A less-finish part can be eventually replaced by the appropriate color part in a real product order.

The part usage for the less-finish part will have the engineering conditions as its logical expression that determines when it is appropriate to select that part in a product based on an input order that includes a set of options. The less-finish part and its part usage have no knowledge of the color conditions. Further, as the part information changes due to different improvisations, several "revisions" or "versions" of the part are created over time and can be stored in the BOM system. In various embodiments, this lifecycle of maturity or change is managed on the less-finish part, without having to be duplicated onto each colored part.

Disclosed embodiments can manage the color parts and color part usages which are necessary generate a BOM for the colored variants of the product. Note that the color parts and color part usages though distinct objects and records in the BOM system, still inherit or derive certain characteristics, usually engineering characteristics, from the template less-finish part and part usages. The system can synchronize the less-finish part and all the derived color parts properties, and do the same for less-finish part usages and color part usages.

From a business standpoint, a color part generally qualifies for an order only if it satisfies the engineering conditions of use along with color influencing conditions. This would mean that the color part usage has to have a logical combination of the color influencing conditions as well as the engineering conditions to be selected during the solve operation for a color variant of the product.

Note that the less-finish part usage and the color part usage can be maintained as distinct objects each having an independent set of properties, where some properties can be shared, and both part usages have their own life cycle and effective dates of use. Propagation of engineering condition on color part usage becomes difficult to manage and error prone as multiple revisions of the less-finish part usage come into existence along with revisions of the color part usage. The number of different colors to manage can also increase complexity. Disclosed embodiments can manage accurate versions of the color parts and color part usage and compute the accurate color BOM for an order.

Disclosed embodiments implement new constructs and the methodology for managing colored parts and color part usages in BOM documentation, and also implement techniques to manage the "logical expression" and the enhanced logic of BOM solve to correctly identify the parts for color order.

Disclosed embodiments can also implement a "color explosion rule." This includes documenting appearance data on less-finish parts along with the variant conditions under which the color part will be used on a product. This data can be implemented as color explosion rules in a color explosion rules matrix.

Figure 3 illustrates an example of a color explosion rules matrix 300. In this example, given a color explosion rule 302 has identifier (ID) CR1 and has a color explosion rule name 304. Each color explosion rule 302 has a corresponding less-finish part name 308 and less-finish part number 306. Each color explosion rule 302 is associated with a visual appearance group name 310 and one or more product models 312.

A color explosion rule 302 is a statement that references a less-finish part, has appearance information, and can be associated with one or more color influencing options 314. While the appearance information gets applied to the color part that is generated from the color explosion rule, the color influencing options 314 are required to author color conditions to the generated color part usage from the specific color explosion rule. In Fig. 3, color explosion rule CR1 is for less-finish part TR3668 with visual appearance group name SVM BLU. The named appearance information can include color, gloss, texture, and other details.

Each color explosion rule also has a color condition 316 which comprises of the logical combination of the color influencing options. In Fig. 3, the combination of selected and unselected color influencing options 314 together comprise the color condition 316. A given color condition 316 may be a logical combination of all or only some of the color influencing options 314. The color condition 316 indicates under what color conditions (which are usually specified on or derived from the product order) the color part should be used in the product. Multiple such rules can be authored for one or more color parts.

A "color part explosion" refers to generating color parts from the less-finish part and according to the color explosion rules. In such a case, the system receives a user selection of a color explosion rule. The system can also receive user selection of a "generate color part" operation. The system generates a new part record in the database that corresponds to the less-finish part and carries the appearance as specified on the color explosion rule. This color part will have its own unique part number; however it will inherit the engineering characteristics from the less-finish part that is specified on the color explosion rule. In various embodiments, the color part will be maintained as a separate part but does not require that the engineering data and characteristics of the less-finish part be duplicated; rather, the color part can include additional characteristics and attributes, including color data, that is overlaid to the corresponding less-finish part.

A "color part usages explosion" refers to generating color part usages from the less-finish part usage and according to a color explosion rule. When a color part is generated, there is a need to generate the color part usage for that color part. Without the color part usage, the solve will not be able to pick the color part for the order with color options. This color part usage can be used for documenting the conditions under which the color part is used in the product.

The color part usage is the logical replacement of the part usage for the corresponding less-finish part for the color order. The color part usage can internally maintain a reference to the less-finish part usage, such as by a series identifier. This reference can be imprecise, which means it is not necessarily fixed to a specific revision of the less-finish part usage but can be dynamically resolved to a revision based on configuration conditions such as the effectivity date on the order. The color part usage can be limited to including only the color conditions.

Disclosed embodiments also include processes that avoid the necessity to document and generate the combination of the color and the engineering logical expression on the color part usage for the purpose of solving the BOM for an order with color conditions. Disclosed embodiments include processes to correctly compute the solve result even when the computed logical expression is not documented on the color part usage.

Further, after the solve result is obtained, the system can present the BOM solve results visually by applying the appearance information from the color parts, to produce a visual result matching the color order. By doing so, the system can change the visual representation at runtime based on color order conditions and its results.

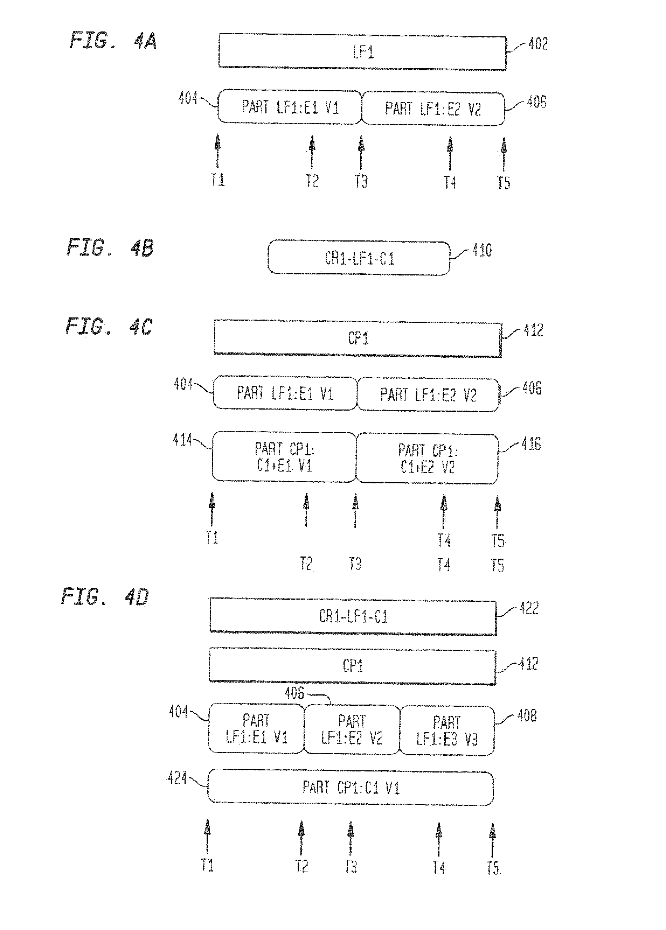

Figures 4A-4D illustrate managing color and engineering conditions and a BOM solve for the color order.

In the example of Fig. 4A, there is a less-finish part LF1 402 with corresponding part usages referred to as less-finish part usage 404 and less-finish part usage 406, both of which refer to less-finish part LF1 402. These part usages can be authored manually for the less-finish part LF1 402 via an interaction with the system. Less-finish part usage 404 and less-finish part usage 406 represent two versions (revisions) of the part usage for less-finish part 402. The condition of use of the part is different for part usage 404 and part usage 406. In this example, condition E1 is set on less-finish part usage 404 (v1) and condition E2 set on less-finish part usage 406 (v2).

These versions are effective at different dates. Part usage 404 is effective at dates T1-T3 and part usage 406 is effective at dates T3-T5. There should not be overlapping versions to avoid duplicate parts in the BOM.

Each part usage and its versions can share a "common series identifier" (series ID) such as "AAA." In other words, there can be a common property on each part usage version that identifies all part usage versions of the same chain.

Fig. 4B illustrates an example of a color explosion rule 410. Color explosion rule 410 CR1 for part LF1 carries the color condition C1.

Fig. 4C illustrates an example of exploding the color explosion rule to generate the color part 412 CP1 and the color part usages 414 and 416. Color part usage 414 and color part usage 416 represent two versions of the part usage for color part 412 CP1. The condition of use of the part is different for color part usage 414 and color part usage 416. In this example, condition E1 is set on color part usage 414 (v1) and condition E2 set on color part usage 416 (v2). In this example, the engineering conditions and the color condition is combined and properties of each less-finish part usage is inherited to the corresponding color part usage; the engineering conditions and the color condition is combined and properties of less-finish part usage 404 is inherited to the color part usage 414 and the engineering conditions and the color condition is combined and properties of less-finish part usage 406 is inherited to the color part usage 416. In various embodiments, each less-finish part usage includes engineering conditions and the color part usages do not include engineering conditions.

Each color part usage 414 and 416 can maintain the same series ID as the corresponding less-finish part usages 404 and 406, and the series ID can be stored in or associated with the color part usage. This reference, "AAA" in this example, can be imprecise, which means a color part usage version does not know which is the master less-finish part usage version until additional information, such as an order date, is available.

Over time, when different parts become effective, the user in some systems must perform several actions, particularly in cases where the engineering conditions are stored as part of the color parts or the engineering conditions of use are stored as part of the color part usages. In this example, the user must compute and save the logical condition "C1 AND E1" on color part usage version 414 (v1). When less-finish part usage 406 (v2) is introduced, at date T3 and with engineering condition E2, a color part usage 416 with the logical combination of "C1 AND E2" is necessary to support the orders from date T3 onwards.

This action will be needed for all colored part usages of all the color parts with which LF1 will be replaced. There will be several color part usages versions, one for each color part. In summary, every time the engineering condition changes (changes in the less-finish part itself, such as v2 with engineering condition E2 starting at date T3 in this example), the logical expression needs to be updated on the color part usages. In a manual process, this "ripple effect" on documentation is painful to execute, error prone, and time consuming. There is cost in terms of time and money for the business to keep all the documentation up-to-date.

When the documentation is complete, the system is ready to receive orders to generate the BOM. Using the conditions as described in this example, an input order can have the logical condition as C1, E1, for a date T2. At date T2, the color part usage is valid only if the order has C1 and E1, so only color part usage 414 is valid. At date T4, however, the color part usage is valid only if the order has C1 and E2, so only color part usage 416 is valid. In this example, this would require creating a new color part usage every time a new less-finish part usage is created, so color part usage 416 must be created when less-finish part usage 406 is created.

According to other various embodiments, in contrast, the color part usage does not carry the engineering conditions of use from the less-finish part usage. This is contrary to the example of Fig. 4C above, that requires inheriting the properties from less-finish part usage to the corresponding color part usage and having a computed logical expression of engineering and color conditions. Fig. 4D illustrates an example where the color part usage 424 only carries forward and maintains the color condition of use from the color explosion rule 422 when it was exploded from the color explosion rule 422, at date T1 in this example.

As illustrated in Fig. 4D, the color part usage 424 has the color part 412 CP1; it carries the color condition C1 from the color explosion rule 422 CR1.

Again, the part usage of less-finish part 402 LF1 will undergo changes to the engineering conditions over a period of time, producing corresponding less-finish part usages 404, 406, and 408. There may be other reasons to version the part usage but this example focuses on a change in the Engineering condition. In these embodiments, the color part usage 424 has no need to react to the change of engineering condition, in contrast to the example of Fig. 4C.

In these embodiments, all of the color part usages remain unaffected. There is no need for the system to "adjust" all the color part usages for different colors of the same less-finish part for the sake of change in the engineering condition from time T2 onwards.

The system can then calculate the correct BOM even when the color part usage does not have the engineering conditions at T2 and beyond or at any given point in time.

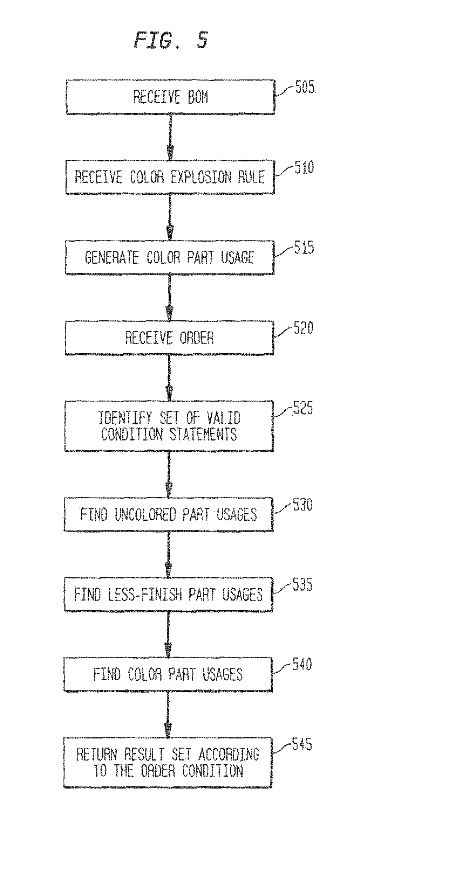

Figure 5 illustrates a flowchart of a process in accordance with disclosed embodiments that may be performed, for example, by a PLM or PDM system (referred to generically as the "system" below), to find the correct color part usages for an input order which is for a color variant of a product. This process maintains the capability to solve for less-finish part usages when engineering orders are executed, such as orders inside the organization that only deal with the less-finish part where the color part may not have yet been generated.

This process can handle less-finish part usages, color part usages, and "uncolored" part usages, such as part usages of parts that are not colored, like an underbody axle engine casing. From the database normalization perspective, in various embodiments, conditions are maintained distinct from the objects on which those conditions are imposed. The part usages can reference the condition in a condition table.

The system receives a BOM, such as BOM 150, including a plurality of less-finish parts and corresponding less-finish part usages (505). Receiving, as used herein, can include loading from storage, receiving from another device or process, receiving via an interaction with a user, or otherwise.

The system receives a color explosion rule (510). The color explosion rules can be associated with color-influencing options and can have a color condition that includes a combination of the color-influencing options.

The system generates at least one color part and at least one color part usage from the less-finish part usages and according to the color explosion rule (515). This can also include generating at least one color part from the less-finish parts and according to the color explosion rule. This can include storing the color part usages and color parts in the BOM. This can be performed as described above for exploding the color explosion rule. In various embodiments, each less-finish part usage includes engineering conditions and the color part usages do not include engineering conditions.

The steps above produce the color parts and color part usages as described above. At this step, the documentation is completed. The following steps perform a solve on the BOM.

The system receives an order with an order condition (520). The order condition can include a color condition of uncolored, less-finish, or colored part usages. The order condition can include effectivity date, engineering conditions, or revision configuration rules.

The system can identify a set of valid condition statements from the BOM that satisfy the order condition (525). This set can be a subset of condition statements 152. One way in which this can be performed is described in United States Patent 8,533,142, hereby incorporated by reference; other techniques are known to those of skill in the art. The valid condition statements can include color condition statements that specify, for example, whether the part is colored, uncolored, less-finish, or of a specific color.

The system can find all uncolored part usages in the BOM according to the set of valid condition statements (530). These are the part usages in the BOM which are not white and not colored and whose condition statement is in the set of valid condition statements that satisfy the order condition A. These are part usages for parts which do not exhibit colors. These are uncolored parts.

The system can find all less-finish part usages in the BOM according to the set of valid condition statements (535). These are the part usages in the BOM which are not colored or uncolored and whose condition statement is in the set of valid condition statements that satisfy the order condition A.

The system can find all the color part usages in the BOM according to the set of valid condition statements and a color condition statement (540). Note that the order has engineering condition and so less-finish part usages will be selected based on valid engineering conditions. The association between the Color Part usage and the less-finish part usage is maintained via the "series ID". Hence it is possible to only select color part usages when their series ID matching less-finish usage also satisfies the engineering condition. In other words, only those color part usages are selected by the system for which there is a valid less-finish part usage that meets the order condition and the color part usage meets the color condition. Both the conditions should be met simultaneously. Now it is possible to construct the solve result based on desired output. As described above, each less-finish part usage includes engineering conditions and the color part usages do not include engineering conditions.

The system returns a result set to the user according to the order condition (545). The result set can include uncolored, less-finish, or colored part usages according to the order condition, and can include the corresponding parts.

Disclosed embodiments therefore include systems and methods for managing color and engineering logical conditions between less-finish part usages and color part usages.

Disclosed embodiments include a solve process that correctly returns valid results for an input order even when the engineering conditions are not managed on the color part usages.

Of course, those of skill in the art will recognize that, unless specifically indicated or required by the sequence of operations, certain steps in the processes described above may be omitted, performed concurrently or sequentially, or performed in a different order.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims. Moreover, none of these claims are intended to invoke 35 USC § 112(f) unless the exact words "means for" are followed by a participle.

### Further Embodiments

1. A method for product data management, the method performed by a data processing system (100) and comprising:
   receiving (520) an order (160) with an order condition (162);
   identifying (525) a set of valid condition statements (152) from a bill-of-materials (BOM) (150);
   finding (540) color part usages (212, 222, 232) in the BOM (150) according to the valid condition statements (152) and a color condition statement (152), wherein each color part usage (212, 222, 232) corresponds to a less-finish part usage (202), and wherein each less-finish part usage (408) includes engineering conditions and the color part usages (424) do not include engineering conditions; and
   returning (545) a result set according to the order condition, the result set including colored part usages (424).
2. The method of embodiment 1, wherein the BOM (150) includes a plurality of less-finish parts (204) and corresponding less-finish part usages (202), and wherein the data processing system (100) also receives (510) a color explosion rule (410) and generates at least one color part usage (212) from the less-finish part usages (202) and according to the color explosion rule (410).
3. The method of embodiment 2, wherein the data processing system (100) also generates (510) at least one color part (214) from the less-finish parts (204) and according to the color explosion rule (410).
4. The method of embodiment 1, wherein the order condition (162) includes effectivity or version conditions.
5. The method of embodiment 1, wherein the data processing system (100) also finds (535) less-finish part usages (202) in the BOM (150) according to the valid condition statements (152) and the result set includes the less-finish part usages (202).
6. The method of embodiment 1, wherein the data processing system (100) also finds (530) uncolored part usages in the BOM (150) according to the valid condition statements (152) and the result set includes the uncolored part usages.
7. The method of embodiment 1, wherein a same series identifier is used for a less-finish part usage (404) and a corresponding colored part usage (414).
8. A data processing system (100) comprising:
   a processor (102); and
   an accessible memory (108), the data processing system (100) particularly configured to
      receive (520) an order (160) with an order condition (162);
      identify (525) a set of valid condition statements (152) from a bill-of-materials (BOM) (150);
      find (540) color part usages (212, 222, 232) in the BOM (150) according to the valid condition statements (152) and a color condition statement (152), wherein each color part usage (212, 222, 232) corresponds to a less-finish part usage (202), and wherein each less-finish part usage (408) includes engineering conditions and the color part usages (424) do not include engineering conditions; and
      return (545) a result set according to the order condition, the result set including colored part usages (424).
9. The data processing system (100) of embodiment 8, wherein the BOM (150) includes a plurality of less-finish parts (204) and corresponding less-finish part usages (202), and wherein the data processing system (100) also receives (510) a color explosion rule (410) and generates at least one color part usage (212) from the less-finish part usages (202) and according to the color explosion rule (410).
10. The data processing system (100) of embodiment 9, wherein the data processing system (100) also generates (510) at least one color part (214) from the less-finish parts (204) and according to the color explosion rule (410).
11. The data processing system (100) of embodiment 8, wherein the order condition (162) includes effectivity or version conditions.
12. The data processing system (100) of embodiment 8, wherein the data processing system (100) also finds (535) less-finish part usages (202) in the BOM (150) according to the valid condition statements (152) and the result set includes the less-finish part usages (202).
13. The data processing system (100) of embodiment 8, wherein the data processing system (100) also finds (530) uncolored part usages in the BOM (150) according to the valid condition statements (152) and the result set includes the uncolored part usages.
14. The data processing system (100) of embodiment 8, wherein a same series identifier is used for a less-finish part usage (404) and a corresponding colored part usage (414).
15. A non-transitory computer-readable medium encoded with executable instructions that, when executed, cause one or more data processing systems (100) to:
   receive (520) an order (160) with an order condition (162);
   identify (525) a set of valid condition statements (152) from a bill-of-materials (BOM) (150);
   find (540) color part usages (212, 222, 232) in the BOM (150) according to the valid condition statements (152) and a color condition statement (152), wherein each color part usage (212, 222, 232) corresponds to a less-finish part usage (202), and wherein each less-finish part usage (408) includes engineering conditions and the color part usages (424) do not include engineering conditions; and
   return (545) a result set according to the order condition, the result set including colored part usages (424).
16. The computer-readable medium of embodiment 15, wherein the BOM (150) includes a plurality of less-finish parts (204) and corresponding less-finish part usages (202), and wherein the data processing system (100) also receives (510) a color explosion rule (410) and generates at least one color part usage (212) from the less-finish part usages (202) and according to the color explosion rule (410).
17. The computer-readable medium of embodiment 16, wherein the data processing system (100) also generates (510) at least one color part (214) from the less-finish parts (204) and according to the color explosion rule (410).
18. The computer-readable medium of embodiment 15, wherein the order condition (162) includes effectivity or version conditions.
19. The computer-readable medium of embodiment 15, wherein the data processing system (100) also finds (535) less-finish part usages (202) in the BOM (150) according to the valid condition statements (152) and the result set includes the less-finish part usages (202).
20. The computer-readable medium of embodiment 15, wherein the data processing system (100) also finds (530) uncolored part usages in the BOM (150) according to the valid condition statements (152) and the result set includes the uncolored part usages.

## Claims

1. A method for product data management, the method performed by a data processing system (100) and comprising:
receiving (520) an order (160) with an order condition (162);
identifying (525) a set of valid condition statements (152) from a bill-of-materials (BOM) (150);
finding (540) color part usages (212, 222, 232) in the BOM (150) according to the valid condition statements (152) and a color condition statement (152), wherein each color part usage (212, 222, 232) corresponds to a less-finish part usage (202), and wherein each less-finish part usage (408) includes engineering conditions and the color part usages (424) do not include engineering conditions; and
returning (545) a result set according to the order condition, the result set including colored part usages (424).

2. The method of claim 1, wherein the BOM (150) includes a plurality of less-finish parts (204) and corresponding less-finish part usages (202), and wherein the data processing system (100) also receives (510) a color explosion rule (410) and generates at least one color part usage (212) from the less-finish part usages (202) and according to the color explosion rule (410).

3. The method of claim 2, wherein the data processing system (100) also generates (510) at least one color part (214) from the less-finish parts (204) and according to the color explosion rule (410).

4. The method according to any of the preceding claims, wherein the order condition (162) includes effectivity or version conditions.

5. The method according to any of the preceding claims, wherein the data processing system (100) also finds (535) less-finish part usages (202) in the BOM (150) according to the valid condition statements (152) and the result set includes the less-finish part usages (202).

6. The method according to any of the preceding claims, wherein the data processing system (100) also finds (530) uncolored part usages in the BOM (150) according to the valid condition statements (152) and the result set includes the uncolored part usages.

7. The method according to any of the preceding claims, wherein a same series identifier is used for a less-finish part usage (404) and a corresponding colored part usage (414).

8. A data processing system (100) comprising:
a processor (102); and
an accessible memory (108), the data processing system (100) particularly configured to
receive (520) an order (160) with an order condition (162);
identify (525) a set of valid condition statements (152) from a bill-of-materials (BOM) (150);
find (540) color part usages (212, 222, 232) in the BOM (150) according to the valid condition statements (152) and a color condition statement (152), wherein each color part usage (212, 222, 232) corresponds to a less-finish part usage (202), and wherein each less-finish part usage (408) includes engineering conditions and the color part usages (424) do not include engineering conditions; and
return (545) a result set according to the order condition, the result set including colored part usages (424).

9. The data processing system of claim 8, wherein the BOM (150) includes a plurality of less-finish parts (204) and corresponding less-finish part usages (202), and wherein the data processing system (100) also receives (510) a color explosion rule (410) and generates at least one color part usage (212) from the less-finish part usages (202) and according to the color explosion rule (410).

10. The data processing system of claim 9, wherein the data processing system (100) also generates (510) at least one color part (214) from the less-finish parts (204) and according to the color explosion rule (410).

11. The data processing system according to any of the preceding system based claims, wherein the order condition (162) includes effectivity or version conditions.

12. The data processing system according to any of the preceding system based claims, wherein the data processing system (100) also finds (535) less-finish part usages (202) in the BOM (150) according to the valid condition statements (152) and the result set includes the less-finish part usages (202).

13. The data processing system according to any of the preceding system based claims, wherein the data processing system (100) also finds (530) uncolored part usages in the BOM (150) according to the valid condition statements (152) and the result set includes the uncolored part usages.

14. The data processing system according to any of the preceding system based claims, wherein a same series identifier is used for a less-finish part usage (404) and a corresponding colored part usage (414).

15. A non-transitory computer-readable medium encoded with executable instructions that, when executed, cause one or more data processing systems (100) to conduct a method according to any of the claims 1 to 7.
